(19) Europäisches Patentamt

European Patent Office

Office européen des brevets

(11) EP 1 600 117 B1

(12) **EUROPEAN PATENT SPECIFICATION**

(45) Date of publication and mention
of the grant of the patent:
**17.09.2008 Bulletin 2008/38**

(51) Int Cl.:
**A61C 11/00** (2006.01)          **A61C 19/045** (2006.01)

(21) Application number: **04707314.3**

(86) International application number:
**PCT/JP2004/001025**

(22) Date of filing: **02.02.2004**

(87) International publication number:
**WO 2004/082511 (30.09.2004 Gazette 2004/40)**

(54) **DENTAL FACE BOW**

DENTALER GESICHTSBÜGEL

ARC FACIAL DENTAIRE

(84) Designated Contracting States:
**AT BE BG CH CY CZ DE DK EE ES FI FR GB GR HU IE IT LI LU MC NL PT RO SE SI SK TR**

(30) Priority: **31.01.2003 JP 2003025330**
**25.07.2003 JP 2003202010**

(43) Date of publication of application:
**30.11.2005 Bulletin 2005/48**

(73) Proprietor: **Nishihara, Naoki
Takarazuka-shi,
Hyogo 665-0011 (JP)**

(72) Inventor: **Nishihara, Naoki
Takarazuka-shi,
Hyogo 665-0011 (JP)**

(74) Representative: **Grünecker, Kinkeldey,
Stockmair & Schwanhäusser
Anwaltssozietät
Leopoldstrasse 4
80802 München (DE)**

(56) References cited:
WO-A-99/59497          WO-A1-03/007836
DE-C1- 19 702 840      JP-A- 10 295 707
US-A- 5 078 600

**Description**

TECHNICAL FIELD

The present invention relates to a face-bow suitable for use in the dental treatment of edentulous jaw and oligodontia and the like.

BACKGROUND ART

It is extremely important for denture base treatment or implant treatment of edentulous jaw and oligodontia and the like to impart ideal occlusion to artificial dentures and pontics. Conventionally, universal chewing movement of the lower jaw against upper jaw used to be tried to be understood by determining mainly the anatomic form of hard tissue in a buccal cavity and surrounding a buccal cavity and its average values together with several virtual reference lines and planes. And, under present circumstances, in actual treatments, dentists and technicians reconstructs occlusion of each patient based on such universal chewing movement.

The above described reconstruction of occlusion of each patient by dentists and technicians is implemented relying on experience and intuition of doctors and technicians, which lacks references for directions and intensiveness of strong clenching force at the time of actual occlusion, and therefore, it used to be very difficult to quantitatively construct ideal occlusion of individual patient, giving rise to a problem, for example, that it takes fairly long time and a lot of trouble to produce a denture base satisfactory to a patient.

In order to implement improvement on this problem, the inventor hereof has focused attention to a resultant force generated by actual occlusion and specified it and thereby developed a method of arranging to make obtainable ideal occlusion simply in a short time so as to enable efficient production of, in particular, a complete denture base of each patient in a short time and a occlusion device to be used therein together with a face-bow suitable for use in combination with this, which has been already applied for the patent (see Japanese Patent Application No. 2001-215816, Japanese Patent Application No. 2001-392174) and Japanese Patent Application No. 2002-046657) and in WO99/59497.

When the above described newly developed occlusion device is used, nearly ideal occlusion can be constructed fairly simply and in a short time compared with conventional methods, and therefore is enjoying a good reputation in actual treatment scenes, but face-bows currently and widely used are not yet satisfactory enough, but require fairly complicated works for practical use. The inventor hereof focused his attention to that the resultant force generated by maxilla and teeth of a normal human being and the group of jaw-closing muscles attached thereto is applied only to a universal fixed site inside the skull, and subject to years of research and a lot of dental treatment cases, has found out that the resultant force in the case where clenched force does not generate any moment to the both jaws will be directed from the central point in the angle between the left and right parts of maxilla to the central point of frontal sinus. A problem of the present invention is to provide a face-bow which is suitable for use in order to construct ideal occlusion based on the concept of these forces and is excellent in practicability.

DISCLOSURE OF THE INVENTION

In order to solve the above described problem, the present invention employed the following configurations. That is, a face-bow related to the present invention comprises a base frame having a pair of left and right side frames along the both sides of the head of a patient and a lateral frame elongated in the left and right directions to bring the pair of left and right side frames into mutual connection, and a rotary frame supported by the base frame rotatably in such a direction to come close to or depart from the face of a patient inside the above described side frames, characterized in that, to the left and right centers of the above described rotary frame, a mouthpiece to be inserted into the buccal cavity of a patient is installed, and to the above described rotary frame, earpieces to be engaged in the vicinity of the left and right earholes of the patient and a reference point indicating device of indicating the chewing force concentrating part to be set in the vicinity of nasion of the patient, flames has to be placed symmetrically on the same plane of 3 points where is concentrating part and both side mandible angles.

As the above described mouthpiece, a reference piece of measuring tooth row curves of a patient or a supporting device of fixing and supporting the wax limbmounted inside the buccal cavity of the patient are attached. Here, at the both sides of the above described rotary frame, a rotary indicating device, which is rotatable to the rotary frame and indicates installation height of the rotary frame, is preferably provided. Moreover, a pat member, which is applied in the vicinity of the eyebrows of a patient and supports the base frame, is preferably provided in the center between the left and the right of the base frame. As the pat member, in order not to harm the skin of a patient at the time of wearing and removing, the one comprising a pair of freely rotary and spherical structures which contact at the both sides of crista nasalis in the vicinity of the eyebrows of a patient is preferable.

The present invention is characterized by a point that occlusion is constructed, focusing attention to the resultant force at the time of occlusion by masseter muscles. That is, the muscles which operate at the time of occlusion are, as shown in Figure 6, musculus masseter (M. masseter) Mm and musculus temporlis (M. temporlis) Mt. Forces generated by these are vectors having a predetermined directions and quantities, and according to research of the inventor hereof, the resultant force of them may be slightly different in respective patients, but as a standard, as shown in Figure 7 and Figure 8, was found to direct to the point in the vicinity of the forward edge part of frontal sinus (the part immediately above nasion) (to be referred to as "N point").

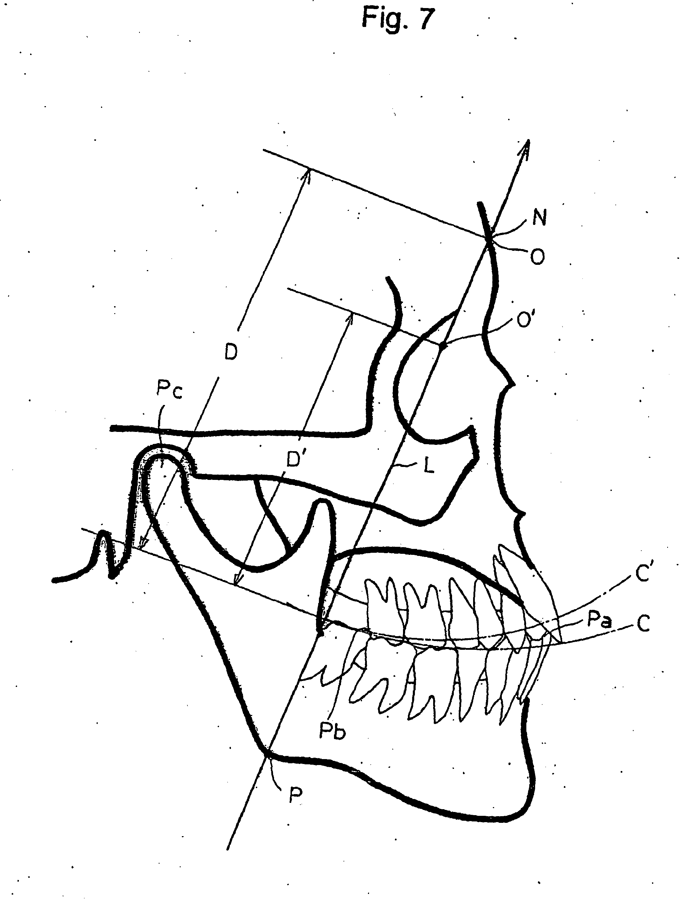

In Figure 7 which depicts the side surface of a head two-dimensionally, reference character, P, Pa, Pb and Pc respectively denotes starting point of chewing force, the occlusion point of anterior teeth, the occlusion point of back teeth and the condyle point. In the said drawing, the resultant force of the occlusion force applied to the occlusion point of back teeth Pb and the occlusion force applied to the condyle point Pc is a vector having the L direction as shown in the drawing, and the relationship between these forces and their resultant force F from the center point between right side and left side mandible angles is as shown in the following equations. Reference numeral O denotes the above described N point.

$$N_1 \sin\theta_1 = N_2 \sin\theta_2$$

$$N_1 \cos\theta_2 + N_2 \cos\theta_2 = F$$

$$2\, N_1 \cos\phi_1 \cdot \sin\theta_1 = 2\, N_2 \cos\phi_2 \cdot \sin\theta_2$$

$$2\, N_1 \cos\phi_1 \cdot \cos\theta_1 + 2\, N_2 \cos\phi_2 \cdot \cos\phi_2 = F$$

In addition, it has been found that the resultant force at the time of occlusion of all patients is not always directed to O (N point), and the point where the resultant force at the time of occlusion is directed gradually approaches the side of point P on the line L (to be referred to as "resultant force line" or "vector axis") connecting the above described N point and the point P of the angle of the lower jaw due to senescence or absorption of bones due to aging and the like.

Therefore, if a circle (actually a sphere) with the point on the above described resultant force line L (the location of which is slightly different in patients) as the center is drawn, each occlusion point in ideal occlusion must be arranged on the circle. The present invention was completed based on such knowledge, and ideal occlusion is obtained by producing a denture base based on the above described circle for balance of chewing vector.

BRIEF DESCRIPTION OF THE DRAWINGS

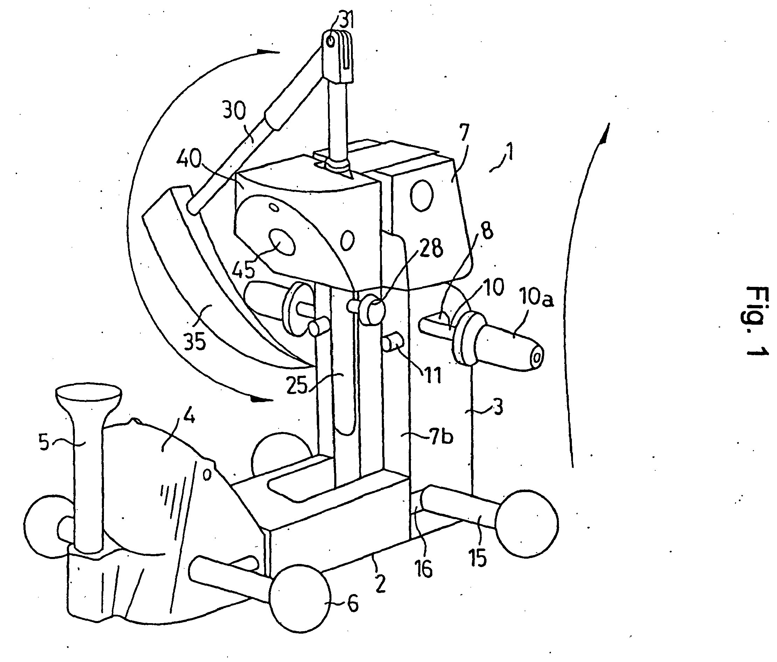

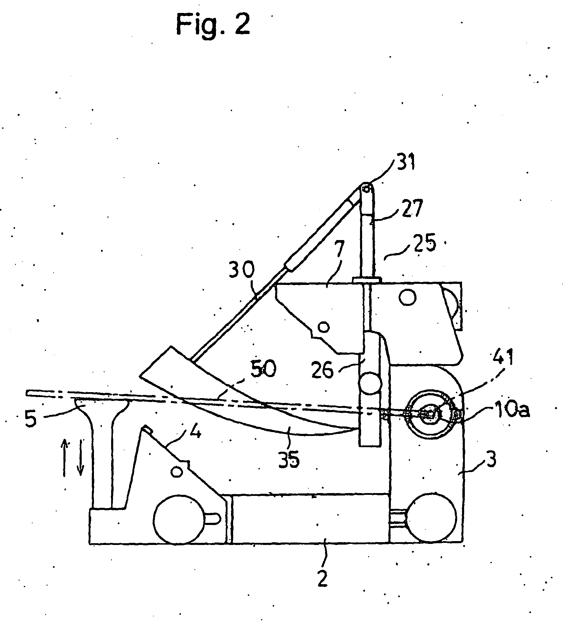

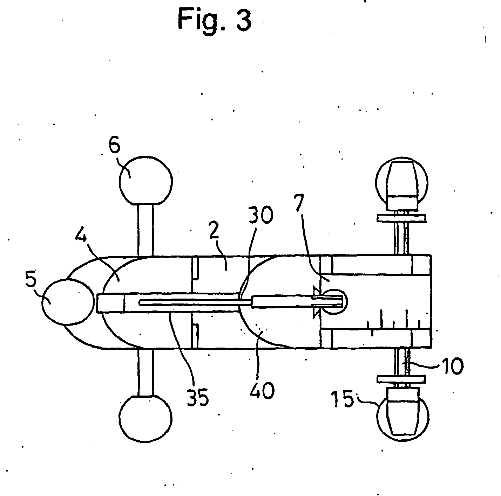

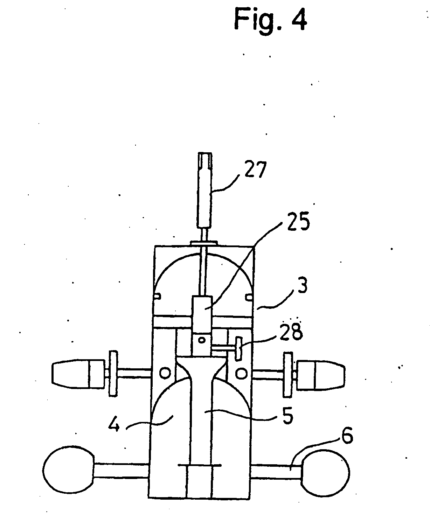

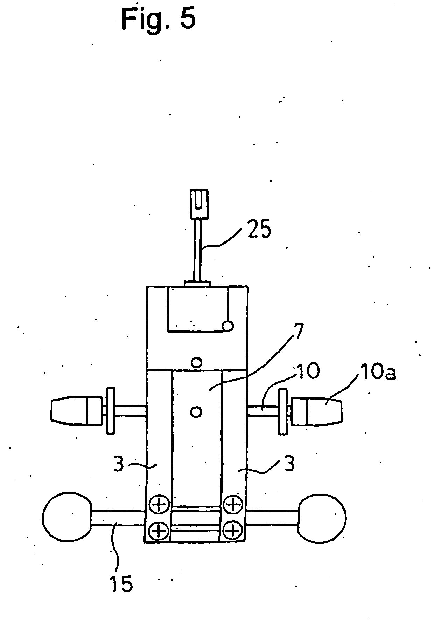

Figure 1 is a perspective view of an example of an occlusion device of the present invention, Figure 2 is a side elevation thereof, Figure 3 is a plan view thereof, Figure 4 is a front elevation thereof and Figure 5 is a back elevation thereof.

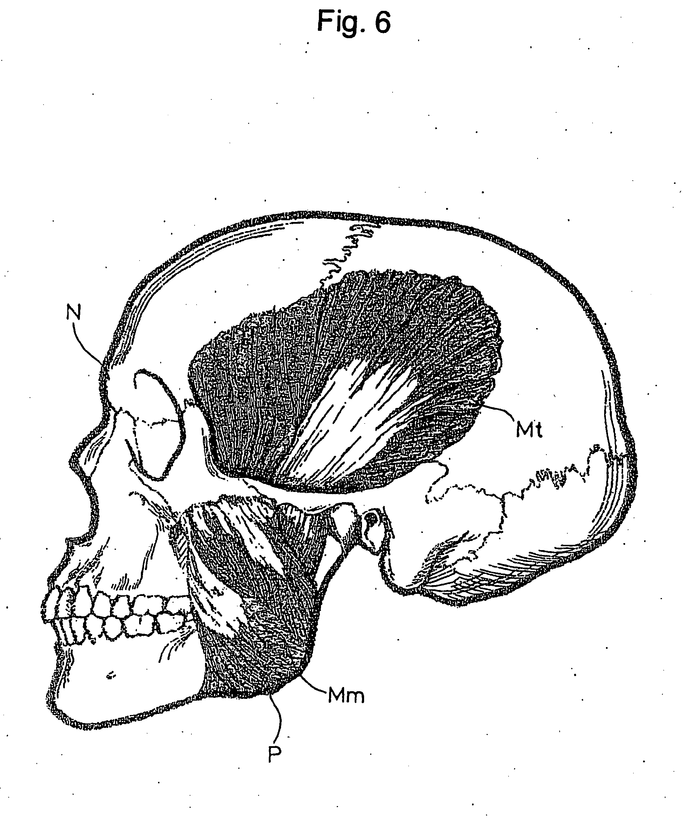

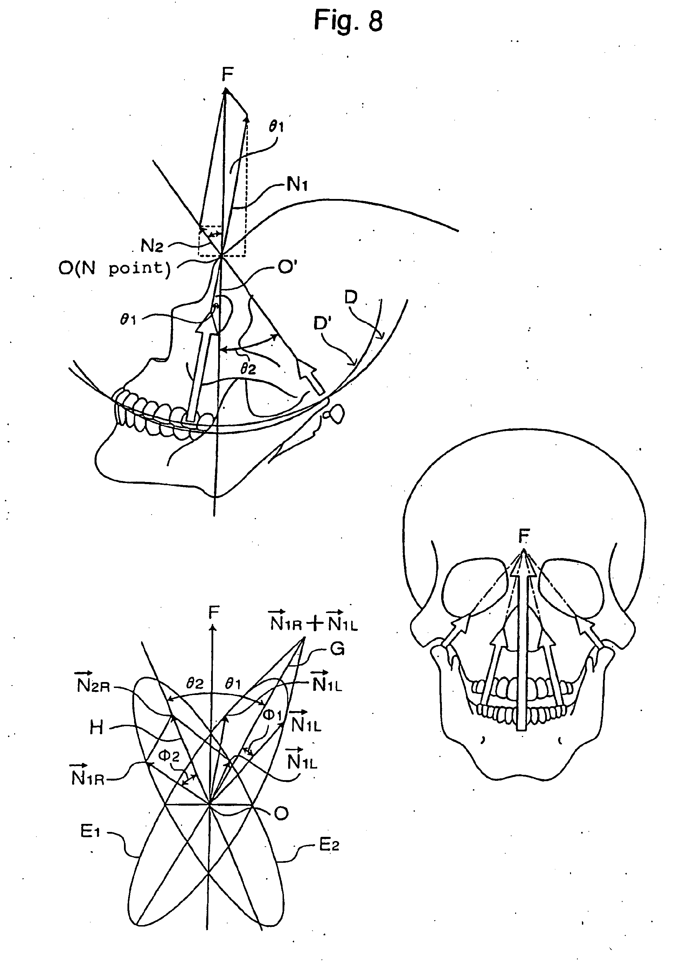

Figure 6 is a side elevation of a skull depicting occlusion muscles, Figure 7 is side elevation of a skull depicting the resultant force of the occlusion forces two-dimensionally and Figure 8 is a front elevation and a side elevation of a skull showing the directions of occlusion forces.

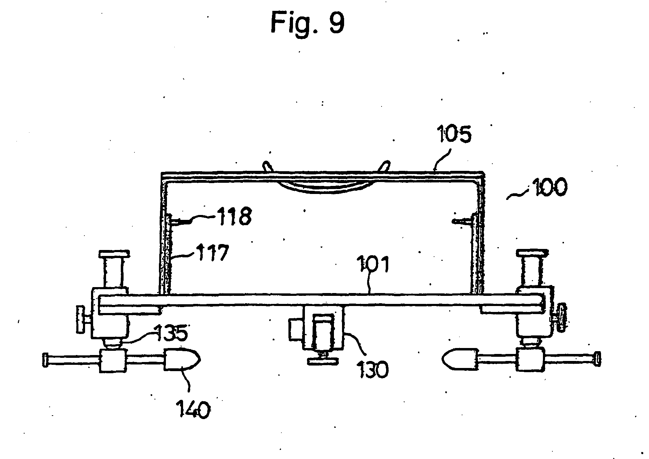

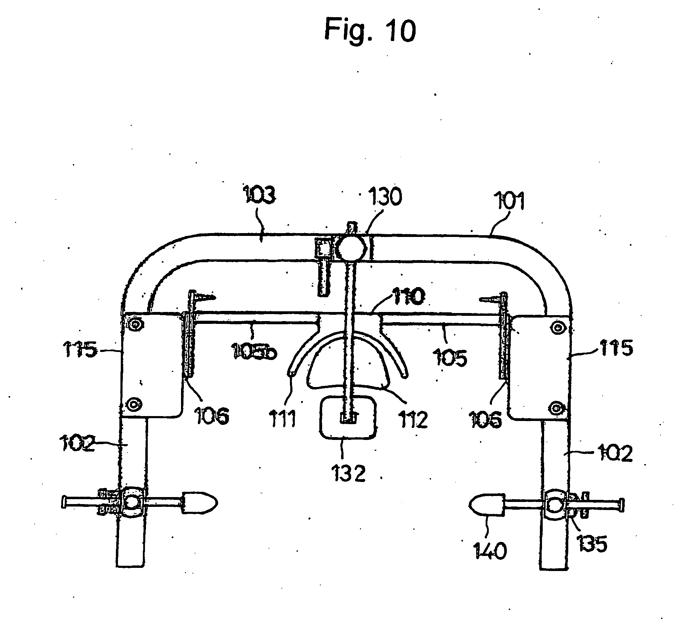

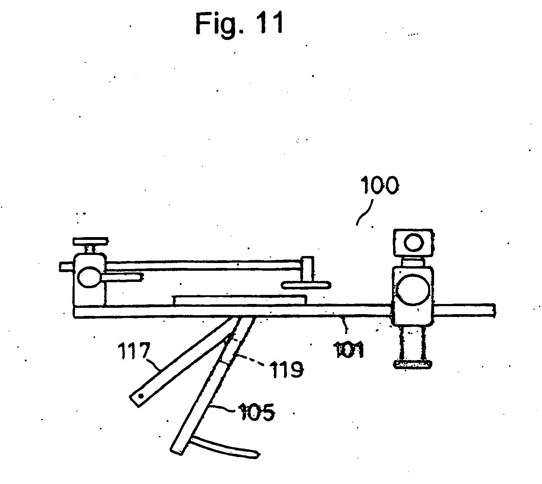

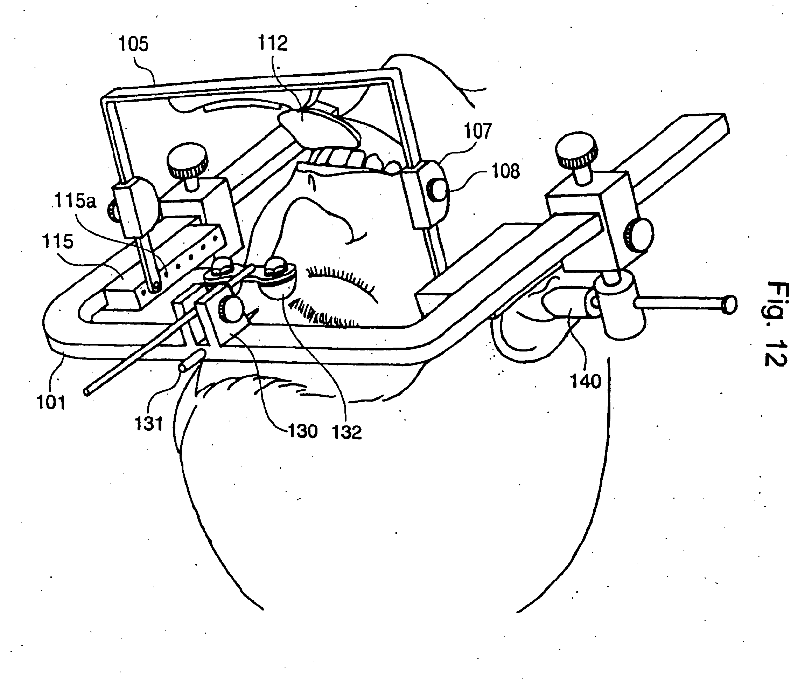

Figure 9 is a plan view of a face-bow, Figure 10 is a front elevation thereof, Figure 11 is a side elevation thereof and Figure 12 is a perspective view depicting how to use the face-bow.

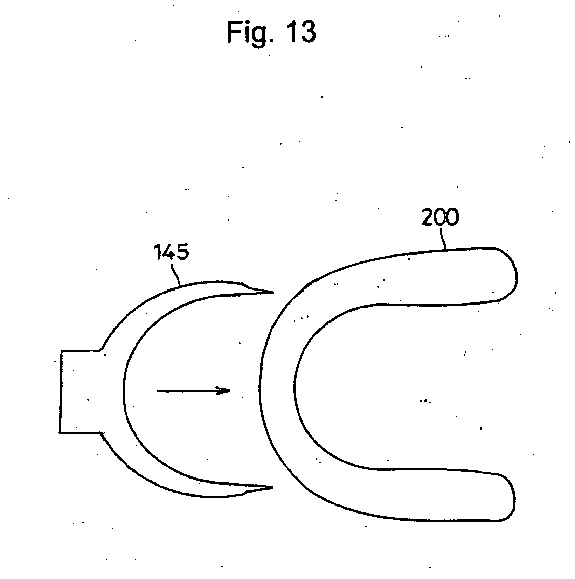

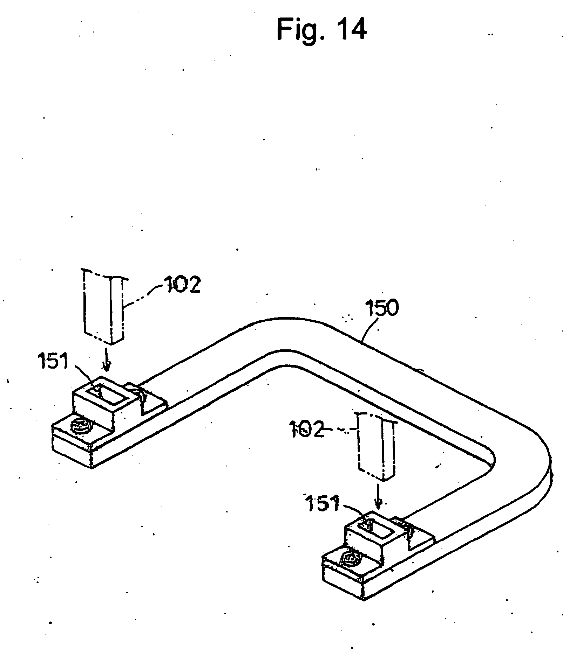

Figure 13 is an explanatory diagram on the method of keeping a wax limb to the face-bow. Figure 14 is a plan view of a base of supporting the face-bow.

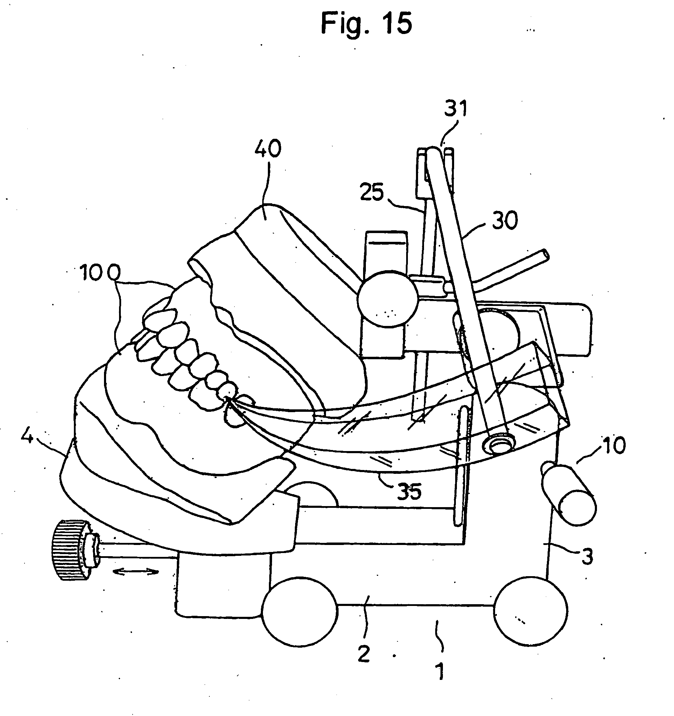

Figure 15 is a perspective diagram depicting a state where a wax limb has been mounted onto the occlusion device.

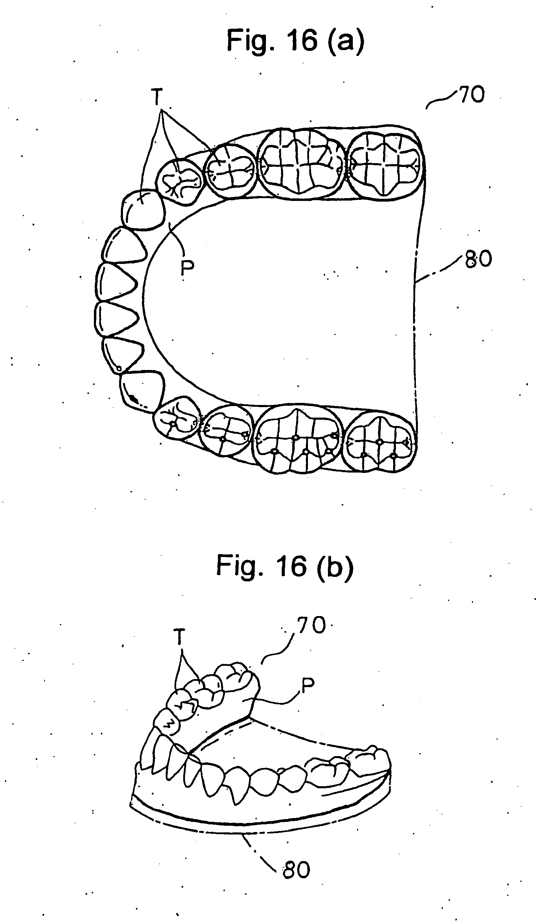

Figure 16 is a plan view (a) and a perspective view (b) of a tooth unit.

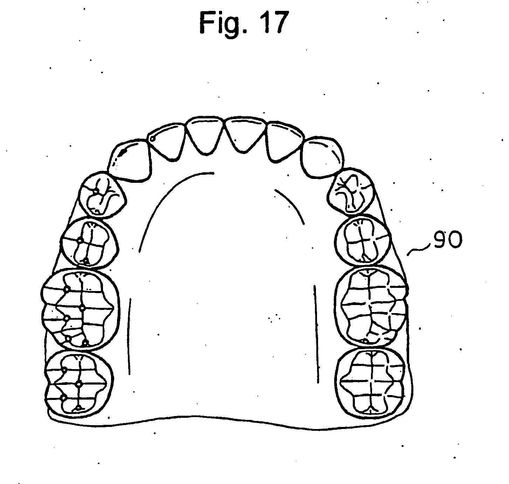

Figure 17 is a plan view of denture base.

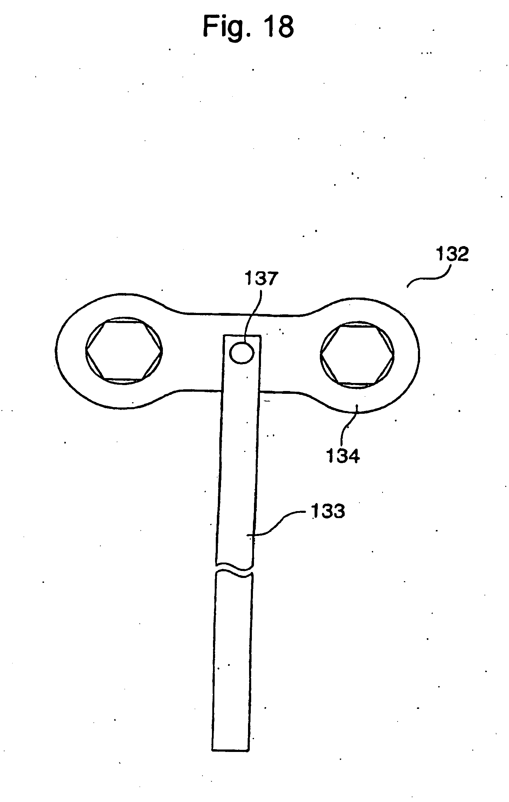

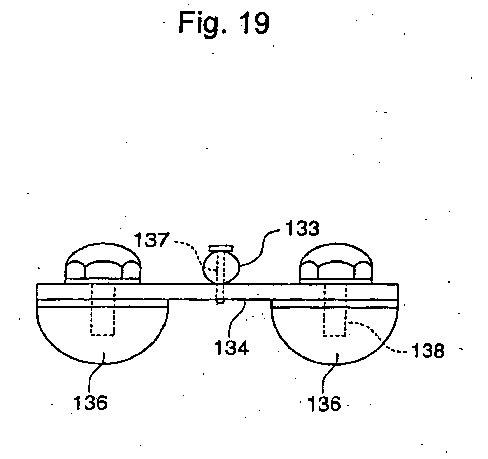

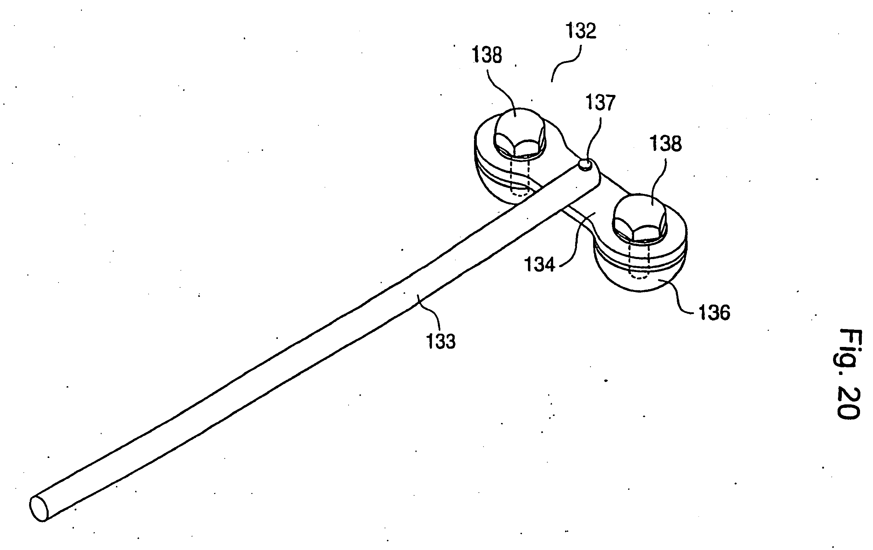

Figure 18 is a plan view of a pat member, Figure 19 is a front elevation of the pat member and Figure 20 is a perspective view of the pat member.

BEST MODE FOR CARRYING OUT THE INVENTION

Specific description will be implemented hereunder based on an embodiment of the present invention depicted in the drawings. At first, an example of occlusion device suitable for use in production of denture base together with a face-bow related to the present invention is shown in Figure 1 to Figure 5. This occlusion device 1 comprises a base 2 equipped on a plane, and a support 3 is provided to stand in the rear end part of the base 2, and a lower jaw supporting member 4 is provided in the front end part. The lower jaw supporting member 4 is mounted on the base 2 so as to be lengthwise position adjustable, and the lengthwise position thereof as well as inclination of the occlusion device to the center axis in the lengthwise direction operation of the shaft 6 is arranged to be adjustable. Reference numeral 5 in Figure 5 denotes a face-bow supporting device for supporting a conventional face-bow, which is not required in the case where the face-bow of the present invention is used. Here, the face-bow related to the present invention is to be used as a vector analyzer capable of analyzing occlusion forces.

The support 3 consists of a pair of left and right frames disposed in parallel with a gap, and a rotary member (moving support) 7 is supported in the gap part of the support 3 so as to be rotary by the shaft 10. A knob 10a of the shaft 10 corresponds to the temporomandibular, is provided to be fixed respectively to the left and the right of the rotarymember 7 and is engaged, in a lengthwise movable fashion, with a longitudinal hole 8 provided in the lateral direction in the support 3. To the end part of the above described knob 10a, a portion to be brought into engagement with ears of the face-bow is attachable. Bolts 11 are lengthwise position adjusting means of determining a lengthwise position of this shaft 10, are provided in the left and the right of the support 3 and respectively push the shaft 10 elastically via a spring provided in the longitudinal hole 8. The upper part of the above described rotary member 7 is bent in the forward direction, and the lower part is provided with a stand 7b. Backward movement of the stand of this rotary member 7 is restrained by a shaft 15, and rotation of the rotary member 7 is kept under restraint by this shaft so that the angle in the vertical direction of the rotary member is kept at a predetermined angle.

Here, the shaft 15 is always pressed/biased backward by a spring provided in the longitudinal hole 16 in the lengthwise direction provided in the support 3. The shafts 15 are provided in the left and the right, and the direction of the rotary member can be adjusted with them. To the upper front side of the rotary member 7, a cast of an upper jaw is attached, therefore, by the weight of which a rotary force operates counter-clockwise of Figure 1, but the rotation thereof is restrained by the above described shaft 15 and the angle of vertical inclination is kept at a predetermined angle. On the other hand, a rod 25 is inserted into the rotary member 7 in the vertical direction. This rod 25 is a dual structure consisting of an outer cylinder 26 and an inside shaft 27, and the inside shaft 27 is supported vertically position-adjustably and rotatably around the axis, and thereabove, an arm 30 is attached vertically rotatably by the axis 31. Reference numeral 28 denotes a helical knob of fixing the outer cylinder 26 and the inside shaft 27.

An arm 30 is length adjustable, and its free end is provided with a circular nail (occlusal curve liner) 35. Each of the above described nail 35 accompanies an arm in predetermined length, which is designed to become a radius suitable to that circle, when attached to the arm of the occlusion device. Here, a plurality of groups of arms (with the nail 35) in different lengths are preferably prepared so as to be ready for appropriate replacement in accordance with posture or levels of senescence of a patient.

The front end part of the forward protrusion of the above described rotary member 7 is provided with an upper jaw support 40. Here, to the lower plane of the upper jaw support and to the upper plane of the lower jaw supporting member 4, magnets 45 for attracting and fixing a model in which a steel piece is embedded are attached

Next, an embodiment of a face-bow of the present invention depicted in Figure 9 to Figure 12 will be specifically described. This face-bow 100 comprises a base frame 101 made of material with rigidity and strength to a certain degree such as metal, plastic and the like. This base frame 101 comprises a pair of left and right side frames 102 and 102 respectively disposed in the both of the left and the right sides of the head of a patient and a lateral frame 103 to bring the upper end parts of these left and right side frames into mutual connection, and is formed to approximately resemble a square brace. The above described side frame 102 is used as a side plane vector axis representing the direction of force at the time of occlusion in a side view.

To the base frame 101, the rotary frame 105 approximately shaped as a square brace is rotatably attached by the shafts 106 and 106. The side frame 105a of the rotary frame 105 is provided with a movable bracket 107 along the side frame, and a lock nut 108 is attached hereto. This bracket 107 and the lock nut 108 can set the rotary frame 105 at any angle to the base frame 101. That is, the bracket 107 is moved and the contact point to the later-described bracket 115 is changed, and thereby the angle of the rotary frame 105 is set.

To the center of the lateral frame 105b of the rotary frame 105, an attachment member 110 of fixing the mouthpiece is fixed. To this attachment member 110, a reference piece of tooth row curve 112 (mouthpiece) is attached with fixing means such as a bolt and the like. As for this tooth row curve reference piece 112, those with various shapes and sizes are supposed to be attached selectively.

Here, the rotary frame 105 is attached to a location adjusted to a patient with a helical piece screwed to a plurality of screw holes 115a, ... provided in the brackets 115 and 115 fixed to the base frame 101. In addition, rotary frame height indicating devices 117 and 117 rotatable to the rotary frame 105 are attached to the both sides of the rotary frame 105. The tip part of this indicating device 117 is provided with an indication pin 118. By attaching the rotary frame 105 to the base frame so that, when this indicating device 117 is rotated, the trace of movement of the above described indication pin 118 will remain in a predetermined range, that is, between the earhole and the condyle, of the temporal region of head of a patient, appropriate tooth row curves can be measured. Reference numeral 119 denotes a holder of fixing the indicating device 117 onto the rotary frame 105. If indication pins 118 in any size do not reach within a predetermined range, the point 0 indicated by the reference point indicating device 131 is placed on the sagittal axis (median line) and undergoes fine adjustment, then identification of the size of the indication pin 118 indicating a predetermined range will become feasible.

Onto the center of the lateral frame 103 of the base frame 101, a bracket 130 is fixed. To this bracket 130, the reference point indicating device 131 of mounting the base frame 101 onto the head of a patient correctly and of being protrusion length adjustable and a pat member 132 which is applied in the vicinity of between the eyebrows of a patient and supports the base frame 101 and is vertically position-adjustable are attached. As the pat 132, a plate-shaped pat moderately bent to contact the skin of a patient may be used, but by contacting the skin of the patient when it is mounted onto the face of the patient, and therefore a pat made of a rotary spherical structure as shown in the drawing is preferably used. As for this pat 132, a plate-shaped base 134 is provided at the tip part of the shaft part 133 to be attached to the base frame 101, and to the base 134, a pair of left and right supporting shafts 138 and 138 are attached so as to intersect (approximately in perpendicular) with the above described shaft part 133. And a pair of left and right rotary spherical structures 136 and 136 are rotatably supported by the respective supporting shafts. Here, the above described base 132 is preferably attached to the shaft part 133 with a pin 137 so as to get rotatable.

The above described reference point indicating device 131 is for indicating a point (N point) where the resultant force at the time of occlusion of a patient intersects with the surface of the frontal bone of the patient, and since it has been found that this occlusion force concentrating part is generated from the middle point between angle of the left and the right lower jaw and is located in the vicinity of the upper part of nasion of the head of a human being, mounting the base frame to the base frame so as to indicate the middle point between the left and right eyebrows of a patient will actually work.

In addition, to the side frames 102 and 102 in the both sides of the base frame 101, earpiece supporting members 135 protruding in the direction perpendicular to the side frames are respectively attached. This earpiece supporting member 135 is adjustable in the protrusion length thereof, and to the tip part thereof an earpiece 140 extended to the direction perpendicular to the supporting member 135 is attached. The earpiece 140 is the one having smooth tip part, and by inserting this into the earhole of a patient, the base frame 101 can be supported to the head of the patient.

This face-bow 100 is mounted onto the head of a patient with the above described pat member 132 and the earpiece 140, but this mounting state will be the state where the side frame 102 of the base frame 101 overlaps the projected line viewed from the side part of the occlusion force vector axis. That is, attachment onto the patient is implemented so that the plane determined by the both of side frames 102 and 102 overlaps the direction of the above described resultant force. Under this state, the rotary frame 105 is attached to the base frame 101 and the rotary frame 105 is rotated, and thereby the mouthpiece attached to the rotary frame 105 can be inserted into the buccal cavity of a patient, the tooth row of a patient can be checked with a reference piece, or wax limb which a patient holds in the mouth can be kept fixed onto the face-bow 100 via the rotary frame. The angle of the rotary frame 105 fixing/keeping the wax limb to the base frame 102 is determined and thereby optimum occlusion state can be regenerated.

Figure 12 depicts a state where the face-bow 100 has been mounted onto the head of a patient in the state of lying on the back. This face-bow is slightly partially different from those shown in Figure 9 to Figure 11 but the basic configuration is the same. This Figure 12 depicts the state where the reference piece 112 is inserted into the buccal cavity and the tooth row curve of a patient is studied. Setting, to the base frame, a rotary frame to which a wax limb fixing/retaining device (reference numeral 145 in Figure 13) having a steep tip part instead of the reference piece 112, the wax limb 200 held by the patient in the mouth can be fixed.

Next, schematic description of a method of producing denture base for a patient with this occlusion device 1 and the face-bow 100 will become as follows.

At first, a base is produced with a known method. The method of producing the base is, at first, an impressing agent is placed on a predetermined tray and impression of the shape of upper and lower teeth and gums of a patient is taken. From above this impression, plaster is flowed in and the plaster cast is made. Onto this plaster cast, a resin base is made and approximate upper and lower wax limbs (alveolar ridge or wax ridge) are produced with wax.

This wax limb (wax ridge) 200 is inserted into the buccal cavity of a patient, and having him to bite it actually, the centric position of the upper and lower jaw is determined. Under the state where the wax limb is held in the mouth, the upper and the lower wax limbs (wax ridges) are brought into bonding integrally each other. Under this state, adjusting affinity with buccal mucosa or outlooks and the like the wax ridges are attached to the face-bow 100. As for this attachment, onto the front surface of the wax ridge 200 disposed inside the buccal cavity of a patient, a wax limb fixing/retaining device (bite fork) is pressed, and the steep tip part is inserted into the wax limb and fixed, and the angle to the side frame 102 is kept constant for occlusion transfer with the lock nut 108 for fixing the bracket 107.

Next, the face-bow 100 is removed from the patient, and is retained by a face-bow base 150 as shown in Figure 14. Since this base 150 is provided with the concave parts 151 and 151 with which the lower end parts of the side frames 102 of the base frame 101 are engaged, these concave parts 151 are brought into engagement with the lower part of the side frames 102 and 102, and thereby the face-bow 100 can be supported under the standing state. Disposing the base on a horizontal plane such a table plane, etc., the side frame 102 representing the side vector axis is supported under a perpendicular state.

As for setting of the face-bow 100 to the occlusion device 1, the occlusion device 1 is disposed between the side frames 102 and 102 of the above described perpendicularly supported face-bow 100, and the wax limb for the upper jaw supported by the face-bow 100 is caused to approach the upper jaw supporting part 40 of the occlusion device. In this case, the rod 25 representing the vector axis of the occlusion device 1 is perpendicular, and therefore corresponds to and is adapted well to, on a perpendicular line, the reference point indicating device 131 (vector axis point) shown in the face-bow supporting the side frame 102 of the base frame perpendicularly. And the plaster is flowed in the upper side of the wax limb and is solidified to give rise to a plaster cast. Figure 15 depicts a state where the plaster cast has been attached to the occlusion device 1. The occlusion device 1 shown in this Figure 15 is the one which has been designed to be adapted to the face-bow 100 of the present invention, and its shape is slightly different from the above described ones, but the basic structure is the same as the above described ones and the same symbols are given to the corresponding parts.

On the other hand, since the distance between the point where the incisal edge of the lower jaw central incisor of a patient contacts with the lower side of the upper jaw central incisor and the N point (the maximum curvature radius of the patient) has been already determined by the face-bow, based on this distance, curves are drawn in the wax limb (wax ridge) where the upper jaw and the lower jaw set in the occlusion device are integrated by the nail 35 of the tip part of the above described arm. At this time, the shaft part 25 supporting the arm 30 is rotary around the shaft center thereof, and the arm 30 is supported so as to be rotary around the shaft 31 as a center, and therefore is caused to rotate around the shaft 31 as a center and can draw a three-dimensional circle on the wax ridge. The position of the shaft 31 supporting the above described arm corresponds to the N point, and the drawn circle represents the occlusion curve (occlusal curve) of a patient. The above described arm 30 can be attached to the shaft part 25b three-dimensionally rotatably with an adjustable joint.

Here, skulls of patients are individually different, by appropriately adjusting length of the arm 30 in occlusion device 1, the shape and sizes of nail 35 (it is convenient to prepare a plurality of types of nails and appropriately exchange them), the lengthwise position and the vertical inclination angle of the rotary member 7, the lengthwise position of the lower jaw supporting member 4, and the lengthwise position of the upper jaw supporting member 40, etc., ideal occlusion is obtained.

Along the drawn occlusal curve, the upper and the lower wax ridges are vertically separated accurately. Thereafter, onto the wax ridges, artificial dentures are attached along the circle. Specifically, the line of artificial dentures of the upper jaw side are disposed on the wax ridge of the lower jaw and fixed temporally. On the other hand, the wax ridge of the upper jaw is washed with hot water to cause the resin base to be exposed. The gap between the tooth row and the resin base is fixed temporally with a resin on the occlusion device 1. Thereafter, only the upper jaw is taken out from the occlusion device and immediately thereafter the resin is flowed into the gap and the tooth row is integrated.

Next, the tooth row of the lower jaw is fixed, and as for this fixing, the tooth row only has to be disposed corresponding with the above described upper jaw and fixed. The procedure is approximately similar to the case of the above described upper jaw. Thus, a denture base where the base and the denture row are integrated is obtained. This denture base undergoes necessary finish processing such as polishing and the like to become a product.

Incidentally, if the face-bow of the present invention is used, it is not necessary to take a temporal region of head cephalo specification photograph of a patient, but in some cases, the cephalo specification photograph may be taken and used for reference. In addition, as a more simple method, without using such a cephalo specification photograph, but temporally fixing the four upper, lower, left and right artificial dentures in the central incisor portion of the upper and the lower alveolar ridges (wax ridges) transferred from inside the buccal cavity of a patient, and having the patient to actuallyclench, the height and the angle of the artificial denture are adjusted to the most appropriate state to the patient. When ideal occlusion is obtained, the occlusal curves, which passes the contact point of these several artificial dentures and the both temporomandibular front fringes and is appropriate to the patient, can be obtained.

That is, based on the jaw cast transferred from inside the buccal cavity of the patient, the base portion of the denture base to be mounted to the jaw of the patient is produced, and a plurality of artificial dentures appropriate to the patient are fixed at an aesthetic location inside the buccal cavity of the patient in the upper jaw ridge anterior teeth part made on the above described base portion, and thereby the inherent curvature radius is determined based on these plurality of artificial dentures. And, according to the size of a circle on the ridge structure drawn by this curvature radius, the denture row is fixed/integrated so that a desired denture base can be obtained. For measuring the above described circle and determining the curvature radius, the arm and the nail of the above described occlusion device 1 can be used.

Next, in the method of producing the above described denture base, a great number of artificial dentures must be attached to the wax ridge along the occlusal curve, and therefore a complicated work requiring a fairly long time period and skill is necessary. If this work can be simplified, production of a denture base will become fairly simple and the production time period can be shortened by a large margin. Therefore an improvedmethod of producing which can realize this simplification will be described below.

In this improved method, a part for the denture base (tooth row unit) 70 arranged along various occlusion curves (occlussal curves) and fixed to the ridge structure of the base member is produced in advance. Figure 13 exemplifies the tooth row unit 70 being this part for denture base, where dentures T, ... have been fixed onto the ridge structure P along the occlusal curve. The occlusal curve used to the denture alignment of this tooth row unit 70 is different variously according to ages or postures of patients, and there are various kinds of denture itself, and therefore in order that a patient can select an optimum one, kinds of tooth row units had better be abundant as much as possible. However, increasing the number of kinds too much, the stock will increase and managing trouble, etc. will increase, which is not economical, and therefore the number should be preferably as small as possible within the range so as to be able to cope with changes in occlusion of patients. The kinds of tooth row units as a part for denture base to be in ready preferably count around several tens of kinds, and actually, around 30 to 50 kinds will be appropriate.

Among the above described ready parts for denture base (tooth row unit), the optimum one is selected in consideration of preference of a patient. And, the selected tooth row unit is attached to the base 80 (shown by a chain line in Figure 13) produced based on the cast taken from the buccal cavity of the above described patient. In this case, the tooth row unit having a curve suitable to the occlusion curve of a patient selected from the above described plurality of kinds of tooth row units is disposed on the line intersecting the curve passing one point in the center part of condyle to one point of 2 to 3 mm closer to the auditory meatus from there, on the X-ray picture of the temporal region of head of that patient three-dimensionally on the inherent dental arch plane determined inside the buccal cavity of a patient, and is fixed onto the above described base portion. The specific fixing procedure is as follows. Firstly, the casts with wax ridges vertically separated along the occlusal curve are set in the above described occlusion device 1, and the upper side tooth row unit 70 is set so as to match the lower side teeth thereof.

Next, removing the wax of the wax ridge of the upper jaw, and setting aside only the upper side plastic base 80, a high quality instantly polymerized resin for dental use is flowed in between the plastic base and the tooth row unit 70 disposed in the lower jaw side to be polymerized. Thereby, the denture base 90, in which the plastic base and the denture row are integrated, as shown in the drawing is obtained.

According to this simplified method of preparing denture base, the operation of implanting denture onto the base 80 produced based on the shape inside the buccal cavity of a patient is not required, and therefore a denture base can be produced extremely efficiently. In addition, the prepared tooth row is the one with artificial dentures being implanted along the occlusion curve taking the occlusion force vector of a patient into consideration, and therefore approximately ideal occlusion is obtained.

As obvious from the above described descriptions, using face-bow related to the present invention, extremely efficient production of a denture base which makes occlusion deemed the most preferable to each patient obtainable has become feasible. Here, in the above described descriptions, mainly the denture base made of resin has been described, but it goes without saying that production in case of the denture base made of metal can be also implemented in the likewise principle.

INDUSTRIAL APPLICABILITY

As obvious from the above described descriptions, using face-bow related to the present invention, extremely efficient production of a denture base which makes occlusion deemed the most preferable to each patient obtainable has become feasible. Here, in the above described descriptions, mainly the denture base made of resin has been described, but it goes without saying that production in case of the denture base made of metal can be also implemented in the likewise principle.

**Claims**

1.  A dental face-bow comprising a base frame (101) having a pair of left and right side frames (102), which can be installed along the both sides of the head of a patient and a lateral frame (103) elongated in the left and right directions to bring the pair of left and right side frames (102) into mutual connection, and a rotary frame (105) supported by the base frame (101) rotatably in such a direction to be able to come close to or depart from the face of a patient inside said side frames (102), **characterized in that,** to the center of the lateral frame (105b) of said rotary frame (105), a mouthpiece (112), which can be inserted into the buccal cavity of a patient, is fixed; and to said base frame (101), earpieces (140), which can be engaged in the vicinity of the left and right earholes of the patient and a reference point indicating device (131) for indicating the occlusion force concentrating part, which can be set in the vicinity of nasion of the patient, are fixed.

2. The dental face-bow according to claim 1, wherein the mouthpiece (112) is a reference piece of measuring tooth row curves inherent in a patient.

3. The dental face-bow according to claim 1, wherein the mouthpiece (112) is a supporting device for fixing or supporting a wax limb (200), which can be mounted inside the buccal cavity of a patient.

4. The dental face-bow according to any of claims 1 to 3, wherein the both side parts of the rotary frame (105) are provided with a rotary indicating device (117), which is rotatable to the rotary frame (105) and indicates installation height of the rotary frame (105).

5. The dental face-bow according to any of claims 1 to 4, wherein a pat member (132), which can be applied in the vicinity between the eyebrows of a patient and supports a base frame, is provided in the center between the left and the right of the base frame (101).

6. The dental face-bow according to claim 5, wherein the pat member (132) comprises a shaft part (133) attached to the base frame (101) and a base (134) provided in the tip part of the shaft part (133), and the base (134) comprises a pair of left and right spherical members which can be applied to the both sides of crista nasalis in the vicinity of the eyebrows of a patient, and the spherical members are rotatably supported respectively by supporting shafts (138) in the direction intersecting said shaft part (133).

**Patentansprüche**

1. Dental-Gesichtsbogen, der einen Basisrahmen (101), der ein Paar aus einem linken und rechten Seitenrahmen (102), die an den beiden Seiten des Kopfes eines Patienten installiert werden können, sowie einen Querrahmen (103) aufweist, der sich in der Links- und Rechtsrichtung erstreckt, um das Paar aus dem linken und dem rechten Seitenrahmen (102) in Verbindung miteinander zu bringen, und einen Drehrahmen (105) umfasst, der von dem Basisrahmen (101) so getragen wird, dass er in einer Richtung gedreht werden kann, in der er innerhalb der Seitenrahmen (102) nahe an das Gesicht eines Patienten kommen kann oder sich von ihm lösen kann, **dadurch gekennzeichnet, dass** an der Mitte des Querrahmens (105b) des Drehrahmens (105) ein Mundstück (122) befestigt ist, das in die Wangenhöhle eines Patienten eingeführt werden kann, und an dem Basisrahmen (101) Ohrteile (140), die in der Nähe der linken und der rechten Ohröffnung des Patienten in Eingriff gebracht werden können, sowie eine Bezugspunkt-Anzeigeeinrichtung (131), die den Okklusionskraft-Konzentrierungsteil anzeigen, der in der Nähe des Nasions des Patienten eingestellt werden kann, befestigt sind.

2. Dental-Gesichtsbogen nach Anspruch 1, wobei das Mundstück (112) ein Bezugsteil zum Messen von Zahnreihenkurven ist, die einem Patienten eigen sind.

3. Dental-Gesichtsbogen nach Anspruch 1, wobei das Mundstück (112) eine Trageeinrichtung zum Befestigen oder Tragen eines Wachslimbus (wax limb) (200) ist, der im Inneren der Wangenhöhle eines Patienten angebracht werden kann.

4. Dental-Gesichtsbogen nach einem der Ansprüche 1 bis 3, wobei beide Seitenteile des Drehrahmens (105) mit einer Dreh-Anzeigeeinrichtung (117) versehen ist, die zu dem Drehrahmen (105) gedreht werden kann und die Installationshöhe des Drehrahmens (105) anzeigt.

5. Dental-Gesichtsbogen nach einem der Ansprüche 1 bis 4, wobei ein Anlageelement (132), das in der Nähe zwischen den Augenbrauen eines Patienten aufgebracht werden kann und einen Basisrahmen trägt, in der Mitte zwischen der linken und der rechten Seite des Basisrahmens vorhanden ist.

6. Dental-Gesichtsbogen nach Anspruch 5, wobei das Anlageelement (132) einen Schaftteil (133), der an dem Basisrahmen (101) angebracht ist, und eine Basis (134) umfasst, die an dem vorderen Endteil des Schaftteils (133) vorhanden ist, und die Basis (134) ein Paar aus einem linken und einem rechten kugelförmigen Element umfasst, das an den beiden Seiten der Nasenleiste (crista nasalis) in der Nähe der Augenbrauen eines Patienten aufgebracht werden kann, und die kugelförmigen Elemente jeweils drehbar von Trageschaften in der Richtung getragen werden, die den Schaftteil (133) schneidet.

## Revendications

1. Arc facial dentaire comprenant un cadre de base (101) ayant une paire de cadres latéraux gauche et droit (102), qui peuvent être installés le long des deux côtés de la tête d'un patient et un cadre latéral (103) allongé dans les sens gauche et droit pour amener la paire de cadres latéraux gauche et droit (102) en relation mutuelle, et un cadre rotatif (105) soutenu par le cadre de base (101) de manière rotative dans un sens tel qu'il peut se rapprocher ou s'éloigner du visage d'un patient à l'intérieur desdits cadres latéraux (102), **caractérisé en ce qu'**un protège-dents (112), qui peut être inséré dans la cavité buccale d'un patient, est fixé au centre du cadre latéral (105b) dudit cadre rotatif (105) ; et des pièces d'oreille (140), qui peuvent s'engager à proximité des orifices d'oreille gauche et droit du patient et un point de référence indiquant le dispositif (131) pour indiquer la pièce de concentration de force d'occlusion, qui peut être disposé à proximité du nasion du patient, sont fixés audit cadre de base (101).

2. Arc facial dentaire selon la revendication 1, dans lequel le protège-dents (112) est une pièce de référence pour mesurer les courbes des rangées de dents inhérentes à un patient.

3. Arc facial dentaire selon la revendication 1, dans lequel le protège-dents (112) est un dispositif de soutien servant à fixer ou soutenir un élément en cire (200), qui peut être installé à l'intérieur de la cavité buccale d'un patient.

4. Arc facial dentaire selon l'une quelconque des revendications 1 à 3, dans lequel les deux pièces latérales du cadre rotatif (105) sont équipées d'un dispositif rotatif d'indication (117), qui peut être tourné vers le cadre rotatif (105) et indique la hauteur d'installation du cadre rotatif (105).

5. Arc facial dentaire selon l'une quelconque des revendications 1 à 4, dans lequel un élément d'appui (132), qui peut être appliqué à proximité entre les sourcils d'un patient et supporter un cadre de base, est disposé au centre entre la gauche et la droite du cadre de base (101).

6. Arc facial dentaire selon la revendication 5, dans lequel l'élément d'appui (132) comprend une partie d'arbre (133) attachée au cadre de base (101) et une base (134) disposée dans la partie pointe de la partie d'arbre (133), et la base (134) comprend une paire d'éléments sphériques gauche et droit qui peuvent être appliqués des deux côtés de la crête nasale à proximité des sourcils d'un patient, et les éléments sphériques sont soutenus respectivement de manière rotative par des arbres de soutien (138) dans le sens coupant ladite partie d'arbre (133).

# Fig. 1

# Fig. 2

# Fig. 3

EP 1 600 117 B1

# Fig. 4

13

Fig. 5

# Fig. 6

## Fig. 7

# Fig. 8

# Fig. 9

# Fig. 10

# Fig. 11

100

117

119

101

105

# Fig. 12

## Fig. 13

# Fig. 14

# Fig. 15

## Fig. 16 (a)

## Fig. 16 (b)

# Fig. 17

90

# Fig. 18

# Fig. 19

# Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001215816 A
- JP 2001392174 A
- JP 2002046657 A
- WO 9959497 A